**Europäisches Patentamt**

**European Patent Office**

**Office européen des brevets**

(11) Numéro de publication: **0 148 669**
**B1**

## FASCICULE DE BREVET EUROPÉEN

(45) Date de publication du fascicule du brevet:
**03.02.88**

(21) Numéro de dépôt: **84402487.7**

(22) Date de dépôt: **04.12.84**

(51) Int. Cl.⁴: **H 02 K 11/00,** H 02 K 17/30

(54) **Platine support de moyen de service pour moteur électrique.**

(30) Priorité: **09.12.83 FR 8319765**

(43) Date de publication de la demande:
**17.07.85 Bulletin 85/29**

(45) Mention de la délivrance du brevet:
**03.02.88 Bulletin 88/5**

(84) Etats contractants désignés:
**AT DE GB IT**

(56) Documents cité:
**DE-A-2 743 569**
**DE-C-614 184**
**GB-A-508 984**
**GB-A-870 163**
**GB-A-1 118 242**
**US-A-2 003 031**

(73) Titulaire: **SOCIETE DES MOTEURS ELECTRIQUES DE NORMANDIE, Le Paulu, F-76112 Saint Pierre de Varengeville (FR)**

(72) Inventeur: **Balthazard, Jean, THOMSON- CSF SCPI 173, bld Haussmann, F-75379 Paris Cedex 08 (FR)**
Inventeur: **Collet, Claude, THOMSON- CSF SCPI 173, bld Haussmann, F-75379 Paris Cedex 08 (FR)**

(74) Mandataire: **Phan, Chi Quy, THOMSON- CSF SCPI 19, avenue de Messine, F-75008 Paris (FR)**

2

## Description

La présente invention concerne une platine support de moyens de service pour moteur électrique. L'invention trouve son application principale dans le domaine des robots ménagers.

Dans de telles applications, le moteur est soumis premièrement à un fort couple de démarrage et à des vibrations de fonctionnement du moteur, deuxièmement subit des agitations et des vibrations causées par les charges déséquilibrées qui sont appliquées sur l'arbre du moteur. Quand le moteur est par exemple du type asynchrone monophasé, c'est-à-dire qu'il dispose d'une phase principale et d'une phase auxiliaire, le démarrage et/ou la sélection des enroulements différents sont réalisés par des moyens de service qui sont dans ce cas composés d'un relais électromagnétique et d'un condensateur. Dans des réalisations de l'art antérieur quand le relais électromagnétique est soumis à de telles vibrations il survient des actionnements accidentels du relais qui mettent en circuit la phase auxiliaire, grillant le moteur. On a proposé aussi de monter le relais sur un amortisseur important. Une telle solution entraîne l'utilisation d'un composant spécial: l'amortisseur et un moyen de fixation supplémentaire sur la carcasse du moteur. Une autre solution a été également proposée pour réduire des transmissions de vibrations. Dans un moteur à condensateur divulgué dans US-A-2 003 031, le condensateur et un transformateur de tension sont fixés dans une boîte laquelle est élastiquement montée sur le moteur au moyen soit de quatre ressorts à lame en Z, en C ou en U soit de quatre ressorts hélicoïdaux soit de deux ressorts à lame en Z sur un côté longitudinal de cette boîte et d'un ressort à lame rectiligne sur l'autre côté longitudinal de cette boîte. Ces moyens élastiques de fixation de la boîte sur le moteur contribuent à atténuer une transmission des vibrations de ce moteur a cette boîte. Cependant leur efficacité se révèle trop insuffisante pour qu'un moyen élastique supplémentaire sous forme d'un ressort à lame en arc doive être utilisé et monté à l'intérieur de cette boîte pour maintenir le condensateur appliqué contre les parois de celles-ci. Dans GB-A-1 118 242 où une bonne isolation électrique et un adéquat refroidissement sont recherchés dans un montage d'un module de commande de vitesse dans un outil électrique portatif, ce module de commande de vitesse est conçu, recouvert par un capot, et solidement fixé sur la surface extérieure de l'enveloppe de cet outil, au moyen de vis qui serrent des bagues en caoutchouc garnissant des trous de fixation de ce module, contre cette enveloppe de l'outil. La solidité de cette fixation dépend du degré de serrage de ces vis. Plus ce serrage est important plus la solidité de cette fixation est grande cependant plus l'élasticité de ces bagues en caoutchouc est altérée autrement dit plus leur durcissement est prononcé. Il en résulte que ces bagues en caoutchouc ne sont pas aptes à réduire la transmission des vibrations du moteur d'entraînement de l'outil à ce module de commande de vitesse. C'est pour protéger ces moyens de service tels que ces relais électromagnétiques que l'invention propose un moyen efficace pour absorber les vibrations susceptibles d'affecter le fonctionnement de ces composants.

Un autre avantage de la présente invention est de permettre de standardiser pour tout moteur des moyens de service montés sur une platine standard. Une telle platine peut être construite à part du moteur puis assemblée en bout de chaîne de fabrication avec son moteur et ses moyens de service avant l'expédition au client.

En effet, la présente invention concerne une platine support de moyens de service pour moteur électrique comme un condensateur et un relais dans le cas d'un moteur électrique asynchrone monophasé, comportant des moyens de fixation absorbant les vibrations de fonctionnement du moteur telle que caractérisée selon les revendications 1 et 6.

D'autres caractéristiques et avantages de la présente invention seront mieux compris à l'aide de la description et des figures annexées qui sont:
- la figure 1: un schéma simplifié d'un moteur électrique équipé d'une platine selon l'invention,
- la figure 2: une vue de la platine de la figure 1,
- les figures 3a et 3b: un détail de fixation d'une platine à un moteur particulier,
- la figure 4: un schéma dun autre mode de réalisation de la platine selon l'invention.

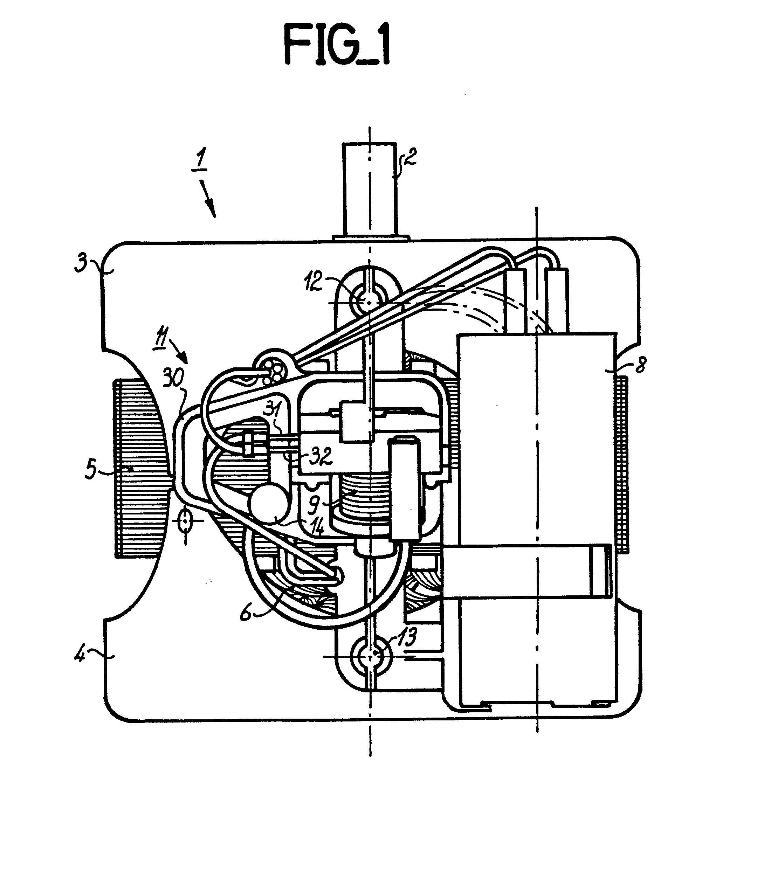

A la figure 1, on a représenté un schéma simplifié d'un moteur selon l'invention. Le moteur 1 comporte une carcasse constituée de deux flasques ajourés 3 et 4. Cette carcasse est fixée à un stator 5 constitué par un empilement de tôles magnétiques, et un rotor non représenté à l'intérieur d'un alésage statorique, le rotor portant un arbre 2 de rotation. Les enroulements statoriques sont visibles au repère 6. Sur la carcasse on a disposé une platine 11 selon l'invention.

Une telle platine peut être réalisée en un matériau organique moulé comme du polyamide ou du polypropylène.

Une telle platine porte les moyens de service comprenant pour un moteur asynchrone monophasé d'une part un relais électromagnétique 9 et un condensateur 8 de démarrage. Si le moteur est d'un autre type, la platine porte les moyens de service convenables (par exemple un sélecteur d'enroulements pour un moteur multicouples ou multivitesses). Les fils de liaison ont été représentés non repérés au dessin. La platine support 11 comporte aussi deux moyens 12 et 13 de fixation à la carcasse 3, 4. Ces moyens de fixation coopèrent avec des moyens d'absorption des vibrations engendrées par le moteur. Dans un mode préféré de réalisation, ces moyens de fixation et d'absorption des vibrations 12, 13 sont disposés le long d'une direction parallèle à l'arbre 2 du moteur. Une telle disposition permet d'éliminer les vibrations engendrées par le couple de démarrage de direction perpendiculaire à cet arbre et les vibrations du moteur en fonctionnement. En effet, la direction de propagation principale des vibrations est sur la carcasse du moteur dans les plans perpendiculaires à l'axe du rotor.

A la figure 2, on a représenté un mode particulier de réalisation d'une platine selon l'invention. Une telle platine peut par exemple être réalisée en un matériau moulé. Parmi les matériaux plastiques choisis on distingue les matériaux qui permettent une fixation par collage de la platine à la carcasse de ceux qui ne permettent pas, comme le polypropylène par exemple, une telle opération. Dans l'exemple de réalisation de la figure 2, on a représenté une platine 11 réalisée en un matériau de cette seconde classe. Dans ce mode de réalisation, les moyens de fixation sont constitués par des languettes encliquetables comme la languette encliquetable 18. Cette languette est constituée en deux parties droite et gauche que l'on peut rapprocher l'une de l'autre de façon à passer à travers un orifice de la carcasse du moteur. Une fois l'orifice dépassé, les épaulements représentés à la base de la languette viennent s'encliqueter de façon à permettre une fixation efficace de la platine sur son support c'est-à-dire sur la carcasse du moteur en l'occurence.Sur la partie droite de la figure, on a représenté deux arcs 19 et 20 qui permettent d'enclipser le condensateur de démarrage. Une fois installé entre ces deux arcs le condensateur est fermement relié à la platine. La platine support comporte aussi des moyens 15, 16, 17 qui permettent notamment la fixation du relais électromagnétique de démarrage à la platine. La platine 11 porte des moyens de protection 14, 30 pour son conditionnement. Es effet, la platine peut être emballée seule ou montée sur son moteur installé dans un boîtier. La colonne creuse 14 et l'épaulement 30 permettent d'une part la protection des connexions 31, 32 du relais 9 à la figure 1.

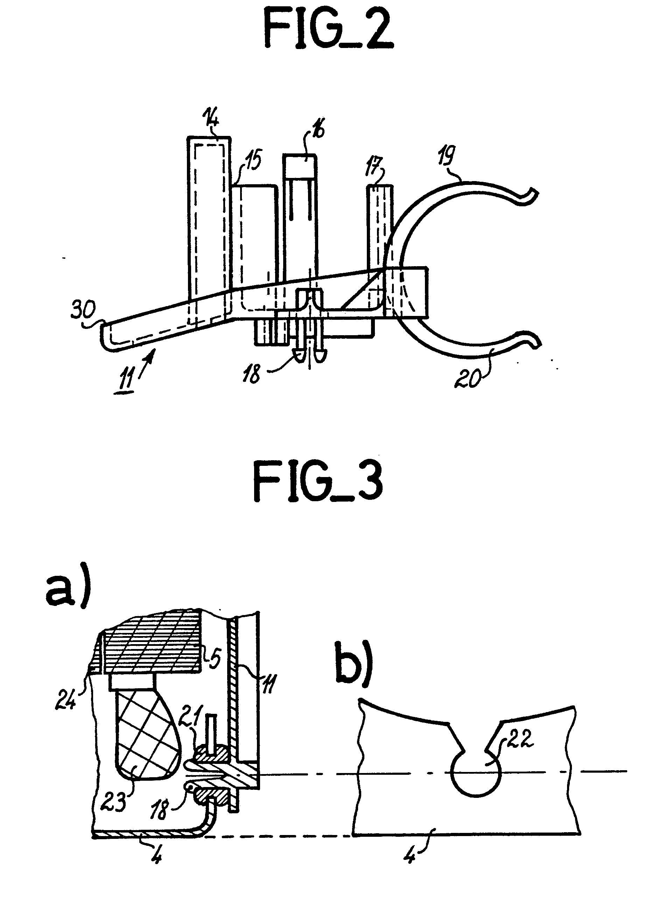

A la figure 3a, on a représenté un mode particulier de réalisation selon l'invention pour un moteur électrique selon la figure 1. Dans un tel moteur, la carcasse est constituée de deux flasques ajourées 3 et 4 les figures 3 a et b montrent un détail de fixation de la platine 11. La partie inférieure 4 de la carcasse porte un silentbloc 21 introduit dans un trou 22 représenté à la figure 3b grâce à une ouverture de ce trou. Dans la figure 3a, on reconnaît une partie de l'empilement statorique 5, un rotor 24 et les têtes de bobine 23 des enroulements statoriques. La platine 11 a été représentée encliquetée à la fois sur le silentbloc 21 et sur la carcasse 4. Le silentbloc amortit une partie de l'énergie des vibrations. Le reste de l'énergie vibratoire est absorbé par le matériau plastique constituant la platine, et par les formes et la répartition des masses sur la platine équipée.

Les silentblocs ont aussi un rôle d'écran thermique de la platine. En effet, certains matériaux plastiques, dont le polypropylène ont des caractéristiques telles que la platine lors du fonctionnement du moteur subit un amollissement préjudiciable. Les silentblocs réalisés en caoutchouc absorbent l'énergie thermique dégagée par le moteur en fonctionnement.

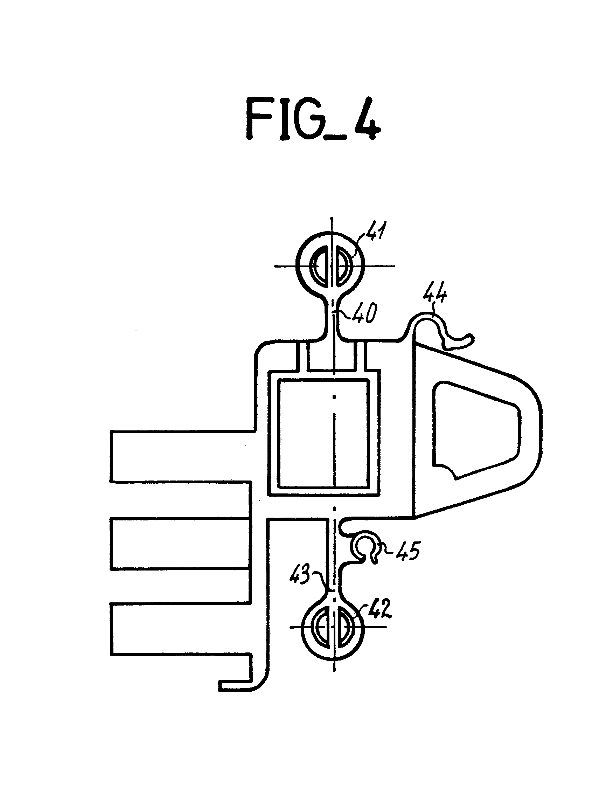

A la figure 4, on a représenté un autre mode de réalisation d'une platine selon l'invention. Les moyens de fixation 40 - 43 de la platine à la carcasse du moteur comportent pour empêcher la propagation des vibrations des bras 40 et 43 mobiles souplement. Quand les languettes encliquetables 41, 42 sont disposées dans des silentblocs le long d'un axe parallèle à l'arbre moteur 2, la propagation des vibrations est perpendiculaire à la direction des bras 40, 43. Ces vibrations sont fortement atténuées par la souplesse des bras 40, 43 sur la platine. Les silentblocs n'ont alors pratiquement plus de rôle amortisseur, mais seulement un rôle d'écran thermique. Si on ne les utilise pas, le matériau utilisé est choisi en fonction de sa bonne tenue en température.

Si la platine est réalisée en un matériau collable, les languettes 41, 42 sont remplacées par des parties adaptées à ce mode de fixation.

A la figure 4, on a représenté deux passe-fils 44, 45 qui permettent de rassembler en un faisceau les fils d'alimentation de la platine et en un autre faisceau les fils de connection au moteur. Une telle réalisation permet un cablâge préalable de la platine. Celle-ci peut être assemblée et peut être suivie indépendemment de celui-ci tant à la fabrication qu'au dépannage.

**Revendications**

1. Platine support de moyens de service pour moteur électrique comme un condensateur (8) et un relais (9) dans le cas d'un moteur électrique asynchrone monophasé, comportant des moyens de fixation absorbant des vibrations de fonctionnement du moteur, caractérisée en ce que les moyens de fixation absorbant les vibrations comprennent d'une part des silentblocs (21) isterposés entre la carcasse du moteur (1) et la platine (11) et d'autre part des languettes encliquetables (18) dans la carcasse du moteur à travers ces silentblocs (21), ces languettes comportant chacune deux parties semi-cylindriques parallèles, séparées entre elles par une fente centrale et terminées à leurs extrémités libres par des épaulements en saillie vers l'extérieur.

2. Platine selon la revendication 1, caractérisée en ce qu'elle est réalisée par moulage d'un matériau organique.

3. Platine selon la revendication 2, caractérisée en ce que le matériau est un plastique collable.

4. Platine selon la revendication 1, caractérisée en ce que les silentblocs (21) sont réalisés en un matériau assurant une protection thermique de la platine.

5. Platine selon l'une des revendications 1 et 4, caractérisée en ce que les silentblocs (21) ont la forme d'un anneau muni d'une gorge médiane ouverte vers l'extérieur.

6. Platine support de moyens de service pour moteur électrique comme un condensateur (8) et un relais (9) dans le cas d'un moteur électrique asynchrone monophasé comportant des moyens de fixation absorbant des vibrations de fonctionnement du moteur, caractérisée en ce que les moyens de fixation comprennent au moins deux bras souples (40, 43) reliés au reste de la platine et qui portent à leurs extrémités libres des languettes encliquetables (18) dans la carcasse du moteur à travers les silentblocs (21).

7. Platine selon la revendication 6, caractérisée en ce que dans les moyens de fixation, les bras souples (40, 43) sont mobiles dans la direction perpendiculaire à la propagation des vibrations à amortir.

8. Platine selon l'une des revendications 1 à 7, caractérisée en ce que les moyens de fixation sont alignés sur un axe parallèle à l'arbre (2) du rotor du moteur électrique (1).

9. Platine selon l'une des revendications 6 et 7, caractérisée en ce que dans les moyens de fixation, les deux bras (40, 43) prolongent la partie médiane de la platine (11) dans des sens opposés suivant une ligne parallèle à l'arbre (2) du moteur (1).

**Patentansprüche**

1. Tragplatte für Betriebseinrichtungen eines Elektromotors, wie ein Kondensator (8) und ein Relais (9) im Falle eines asynchronen einphasigen Elektromotors, mit Befestigungsmitteln, welche die im Betrieb des Motors auftretenden Vibrationen absorbieren, dadurch gekennzeichnet, daß die die Vibrationen absorbierenden Befestigungsmittel einerseits Schwingpuffer (21) umfassen, welche zwischen dem Gestell des Motors (1) und der Platte (11) eingefügt sind, und andererseits Rastzungen (18) umfassen, welche im Motorgestell durch diese Schwingpuffer (21) hindurch verrastbar sind, wobei diese Rastzungen jeweils zwei parallele halbzylindrische Teile umfassen, die voneinander durch einen mittigen Schlitz getrennt sind und an ihren freien Enden in Schultern auslaufen, welche nach außen vorspringen.

2. Platte nach Anspruch 1, dadurch gekennzeichnet, daß sie durch Formen eines organischen Materials gebildet ist.

3. Platte nach Anspruch 2, dadurch gekennzeichnet, daß das Material ein klebbares Plastikmaterial ist.

4. Platte nach Anspruch 1, dadurch gekennzeichnet, daß die Schwingpuffer (21) aus einem Material gebildet sind, welches einen thermischen Schutz der Platte gewährleistet.

5. Platte nach einem der Ansprüche 1 und 4, dadurch gekennzeichnet, daß die Schwingpuffer (21) die Form eines Ringes mit einer mittigen, nach außen offenen Nut aufweisen.

6. Tragplatte für Betriebseinrichtungen eines Elektromotors, wie ein Kondensator (8) und ein Relais (9) im Falle eines asynchronen einphasigen Elektromotors, mit Befestigungsmitteln, welche die im Betrieb des Motors auftretenden Vibrationen absorbieren, dadurch gekennzeichnet, daß die Befestigungsmittel wenigstens zwei nachgiebige Arme (40, 43) umfassen, welche mit dem übrigen Teil der Platte verbunden sind und an ihren freien Enden Rastzungen (18) tragen, die durch Schwingpuffer (21) hindurch in dem Motorgestell verrastbar sind.

7. Platte nach Anspruch 6, dadurch gekennzeichnet, daß in den Befestigungsmitteln die nachgiebigen Arme (40, 43) in einer Richtung senkrecht zur Ausbreitung der zu dämpfenden Vibrationen beweglich sind.

8. Platte nach einem der Ansprüche 1 bis 7, dadurch gekennzeichnet, daß die Befestigungsmittel entlang einer zur Rotorwelle (2) des Elektromotors (1) parallelen Achse ausgerichtet sind.

9. Platte nach Anspruch 6 und 7, dadurch gekennzeichnet, daß in den Befestigungsmitteln die zwei Arme (40, 43) den mittleren Teil der Platte (11) in entgegengesetzten Richtungen längs einer zur Welle (2) des Motors (1) parallelen Linie verlängern.

**Claims**

1. Carrier board for operating means of an electric motor such as a capacitor (8) and a relay (9) in the case of an electric asynchronous monophase motor, comprising mounting means absorbing the vibrations in operation of the motor, characterized in that the mounting means absorbing the vibrations comprise, on the one hand, silent blocks (21) inserted between the frame of the motor (1) and the board (11) and, on the other hand, prongs (18) for snapping engagement in the motor frame through these silent blocks (21), these prongs each comprising two parallel semicylindrical portions separated from each other by a central slot and terminating at their free ends in outwardly projecting shoulders.

2. Board according to claim 1, characterized in that it is embodied by moulding of an organic material.

3. Board according to claim 2, characterized in that the material is a plastic material capable of being bonded.

4. Board according to claim 1, characterized in that the silent blocks (21) are embodied of a material ensuring a thermal protection of the board.

5. Board according to any of claims 1 and 4, characterized in that the silent blocks (21) have the shape of a ring provided with a central groove opening outwardly.

6. Carrier Board for operating means of an electric motor such as a capacitor (8) and a relay (9) in the case of an electric asynchronous monophase motor, comprising mounting means absorbing the vibrations in operation of the motor, characterized in that the mounting means comprise at least two yieldable arms (40, 43) connected to the remainder of the board and comprising prongs (18) at their free ends for snapping engagement in the motor frame through silent blocks (21).

7. Board according to claim 6, characterized in that, within the mounting means, the yieldable arms (40, 43) are movable in the direction perpendicular to the propagation of the vibrations to be attenuated.

8. Board according to any of claims 1 to 7, characterized in that the mounting means are aligned on an axis parallel to the shaft (2) of the rotor of the electric motor (1).

9. Board according to any of claims 6 and 7, characterized in that, within the mounting means, the two arms (40, 43) extend the central portion of the board (11) in opposite directions along a line parallel to the shaft (2) of the motor (1).

# FIG_1

# FIG_2

# FIG_3

a)

b)

# FIG_4